# EUROPÄISCHE PATENTSCHRIFT

(11) **EP 3 027 495 B1**
(45) Veröffentlichungstag und Bekanntmachung des Hinweises auf die Patenterteilung: **20.01.2021**
(21) Anmeldenummer: 14730124.6
(22) Anmeldetag: 06.06.2014
(51) Int. Cl.: B62M 6/45

(54) **ADAPTIVE MOTORDREHMOMENTEINSTELLUNG BEI ELEKTRISCHEN ZWEIRÄDERN**
ADAPTIVE MOTOR TORQUE ADJUSTMENT FOR ELECTRIC TWO-WHEELED VEHICLES
RÉGLAGE ADAPTATIF DU COUPLE MOTEUR SUR LES DEUX-ROUES ÉLECTRIQUES

(30) Priorität: 02.08.2013 DE 102013215287
(43) Veröffentlichungstag der Anmeldung: 08.06.2016
(73) Patentinhaber: Robert Bosch GmbH, 70442 Stuttgart (DE)
(72) Erfinder: STEGMAIER, Juergen, 71638 Ludwigsburg (DE)
(86) Internationale Anmeldenummer: PCT/EP2014/061780
(87) Internationale Veröffentlichungsnummer: WO 2015/014519

(56) Entgegenhaltungen:
- EP-A1- 0 893 338
- JP-A- 2011 068 244
- US-A- 5 910 714

## Beschreibung

Die Erfindung betrifft ein Verfahren und ein System zum Einstellen des Motordrehmoments eines elektrischen Zweirads.

### Stand der Technik

Elektrische Zweiräder weisen zur motorischen Unterstützung des Fahrers verschiedene Fahrerunterstützungsprofile, wie z.B. aus JP 2011 068244 A bekannt, auf. Diese Fahrerunterstützungsprofile geben die Abhängigkeit zwischen dem Motordrehmoment und der Wunschgeschwindigkeit des Fahrers wieder, meist in Form einer Kurve. Je nach Fahrerunterstützungsprofil weist die Kurve ein bis mehrere Knickstellen auf. Es ist bekannt, dass die Ansteuerung des Motors auf der Einstellung durch das Fahrerunterstützungsprofil beruht. Daher ändert sich beim Passieren der Knickstelle im Fahrerunterstützungsprofil die Ansteuerung des Motors für den Fahrer auf wahrnehmbare Weise. Dies verringert seinen Fahrkomfort.

Aufgrund gesetzlicher Bestimmungen ist weiterhin die zulässige motorunterstützte Maximalgeschwindigkeit eines elektrischen Zweirads begrenzt. Daher muss die Motorunterstützung spätestens beim Erreichen dieser Maximalgeschwindigkeit unterbunden werden. In Deutschland beträgt diese Maximalgeschwindigkeit beispielsweise für Pedelecs 25 km/h.

Um ein abruptes Wegfallen der Motorunterstützung zu verhindern, ist bekannt einen Geschwindigkeitsbereich vorzusehen, in dem die Motorunterstützung schrittweise bis zum Erreichen der Maximalgeschwindigkeit zurückgenommen wird. Dieser Abregelbereich wird in Form einer Rampenfunktion realisiert.

Eine flach ausgelegte Abregelrampe, d. h. die Geschwindigkeit bei der die Abregelung startet ist weit von der Maximalgeschwindigkeit entfernt, führt zu einem komfortablen und homogenen Fahreindruck im Bereich der Abregelgeschwindigkeit.

Des Weiteren ist bekannt, dass eine steil ausgelegte Abregelrampe, d. h. die Geschwindigkeit bei der die Abregelung startet, nah an der Maximalgeschwindigkeit liegt, für den Fahrer relativ unkomfortabel ist, da die Motorunterstützung deutlich wahrnehmbar abbricht.

### Offenbarung der Erfindung

Das Verfahren und das System zum Einstellen eines Motordrehmoments eines elektrischen Zweirads umfasst das Einlesen eines Fahrerunterstützungsprofils, das eine Abhängigkeit des Motordrehmoments von einer Pedalbetätigung des Fahrers darstellt. Des Weiteren wird mindestens ein vorgegebener Bereich im Fahrerunterstützungsprofil bestimmt. Dabei handelt es sich um Geschwindigkeitsbereiche. Dieser vorgegebene Bereich beinhaltet dabei eine Stelle, d. h. einen Geschwindigkeitswert, im Fahrerunterstützungsprofil an der das Abhängigkeitsverhältnis von Motordrehmoment und Pedalbetätigung des Fahrers eine nicht stetige Änderung aufweist, beispielsweise in der Steigung der Kurve, die das Abhängigkeitsverhältnis repräsentiert. Unter der nicht stetigen Änderung der Steigung der Kurve des Fahrerunterstützungsprofils versteht sich dabei, dass die Kurve des Fahrerunterstützungsprofils Knickstellen aufweist, bei deren Passieren sich die Ansteuerung des Motors auf abrupte, für den Fahrer wahrnehmbare Weise ändert. Außerdem wird eine zukünftige Geschwindigkeit des elektrischen Zweirads in Abhängigkeit einer aktuellen Geschwindigkeit des elektrischen Zweirads und einer Pedalbetätigung des Fahrers ermittelt.

Erfindungsgemäß wird überprüft, ob sich die zukünftige Geschwindigkeit des elektrischen Zweirads innerhalb des vorgegebenen Bereichs befindet. Ist dies der Fall, so wird das Motordrehmoment abweichend vom Abhängigkeitsverhältnis im Fahrerunterstützungsprofil in Abhängigkeit der Pedalbetätigung des Fahrers eingestellt bzw. verändert. Das Motordrehmoment wird in Bezug auf den Wert im Fahrerunterstützungsprofil dabei entweder abgesenkt oder erhöht.

Der Vorteil ist, dass abrupte Übergänge bei der Motordrehmomentunterstützung während eines Beschleunigungs- oder Abbremsvorgangs unterbleiben, der Motor dadurch geschont wird und sich der Fahrkomfort für den Fahrer erhöht.

In einer Weiterbildung werden ein unterer und ein oberer Grenzwert bestimmt, die den vorgegebenen Bereich begrenzen. Dabei werden die Grenzwerte in einem Abstand von +/- 5 km/h, +/- 4 km/h, +/- 3 km/h, +/- 2 km/h, +/- 1 km/h um einen Geschwindigkeitswert bestimmt, an dessen Stelle sich die unstetige Änderung im Abhängigkeitsverhältnis im Fahrerunterstützungsprofils befindet. Alternativ werden die Grenzwerte in einem Bereich von +/- 2,5 %, +/- 5%, +/-7,5% , +/-10%, +/- 15% oder +/- 20% um den Geschwindigkeitswert bestimmt. In beiden Fällen muß der Abstand zwischen dem unteren Grenzwert und dem Geschwindigkeitswert betragsmäßig nicht mit dem Abstand zwischen dem oberen Grenzwert und dem Geschwindigkeitswert übereinstimmen.

Vorteilhaft ist dabei, dass die Größe des Bereichs, in dem das Fahrerunterstützungsprofil angepasst wird variabel einstellbar ist.

In einer weiteren Ausgestaltung wird das Motordrehmoment linear zwischen dem unteren und dem oberen Grenzwert des vorgegebenen Bereichs abweichend vom Fahrerunterstützungsprofil eingestellt, wenn die zukünftige Geschwindigkeit des elektrischen Zweirads im vorgegebenen Bereich liegt.

In einer Weiterbildung wird das Motordrehmoment ab der aktuellen Geschwindigkeit des elektrischen Zweirads in Abhängigkeit der Pedalbetätigung des Fahrers abweichend vom Fahrerunterstützungsprofil verändert, wenn die zukünftige Geschwindigkeit des elektrischen Zweirads im vorgegebenen Bereich liegt.

Vorteilhaft ist hierbei, dass die Unterstützung des Fahrers frühzeitig an seinen Fahrerwunsch angepasst wird.

In einer weiteren Ausgestaltung wird das Motordrehmoment ab einem Überschreiten oder Erreichen eines unteren Grenzwerts des vorgegebenen Bereichs durch die aktuelle Geschwindigkeit abweichend vom Fahrerunterstützungsprofil eingestellt, wenn die zukünftige Geschwindigkeit des elektrischen Zweirads im vorgegebenen Bereich liegt. Unter dem Überschreiten versteht sich dabei das Passieren des unteren Grenzwerts als Art Schwellenwert, d. h. die aktuelle Geschwindigkeit befindet sich somit im vorgegebenen Bereich.

In einer Weiterbildung wird das Motordrehmoment ab einem Unterschreiten oder Erreichen eines oberen Grenzwerts des vorgegebenen Bereichs durch die aktuelle Geschwindigkeit abweichend vom Fahrerunterstützungsprofil verändert, wenn die zukünftige Geschwindigkeit des elektrischen Zweirads im vorgegebenen Bereich liegt. Unter dem Unterschreiten versteht sich dabei das Passieren des oberen Grenzwerts als Art Schwellenwert, d. h. die aktuelle Geschwindigkeit befindet sich somit im vorgegebenen Bereich.

Vorteilhaft ist hierbei, dass die Unterstützung des Fahrers sowohl beim Beschleunigen als auch beim Verringern der aktuellen Geschwindigkeit individuell angepasst wird.

In einer weiteren Ausgestaltung weist die Steuereinheit einen Mikrocontroller auf.

Weitere Vorteile ergeben sich aus der nachfolgenden Beschreibung von Ausführungsbeispielen bzw. aus den abhängigen Patentansprüchen.

### Kurze Beschreibung der Zeichnungen

Die vorliegende Erfindung wird nachfolgend anhand bevorzugter Ausführungsformen und beigefügter Zeichnungen erläutert. Es zeigen:
- Figur 1: eine Vorrichtung zum Einstellen eines Motordrehmoments eines elektrischen Zweirads,
- Figur 2: ein beispielhaftes Fahrerunterstützungsprofil,
- Figur 3: ein Verfahren zum Einstellen eines Motordrehmoments eines elektrischen Zweirads und
- Figur 4: ein angepasstes Fahrerunterstützungsprofil.

Elektrische Zweiräder, beispielsweise ein Pedelec, Ebike oder EScooter, zeichnen sich dadurch aus, dass das vom Fahrer erzeugte Fahrerdrehmoment durch ein weiteres sogenanntes Motordrehmoment unterstützt werden kann. Somit ergibt sich für den Antrieb des elektrischen Zweirads ein höheres Gesamtdrehmoment als bei einem konventionellen Fahrrad bei gleichem Fahrerdrehmoment.

Um dem Fahrer ein komfortables Fahren mit Motorunterstützung bis hin zu hohen Geschwindigkeiten ermöglichen zu können, ist es wichtig, dass die Unterstützung durch den Motor gleichmäßig erfolgt, d. h. die Motorunterstützung sollte sich nicht innerhalb kurzer Zeit beispielsweise während eines Beschleunigungs- oder Abbremsvorgangs stark verändern.

Des Weiteren ist aufgrund von gesetzlichen Bestimmungen die mit Motorunterstützung zulässige Maximalgeschwindigkeit begrenzt. In Deutschland beträgt diese zulässige Maximalgeschwindigkeit beispielsweise für Pedelecs 25 km/h. Spätestens beim Erreichen der zulässigen Maximalgeschwindigkeit muss die Motorunterstützung unterbunden werden. Um dem Fahrer trotzdem ein komfortables Fahren mit Motorunterstützung bis hin zu hohen Geschwindigkeiten ermöglichen zu können, ist es daher wichtig, dass das Abregelverhalten sowohl eine hohe Motorunterstützung bis in die Nähe der Maximalgeschwindigkeit als auch eine sanfte Reduzierung des Motordrehmoments aufweist.

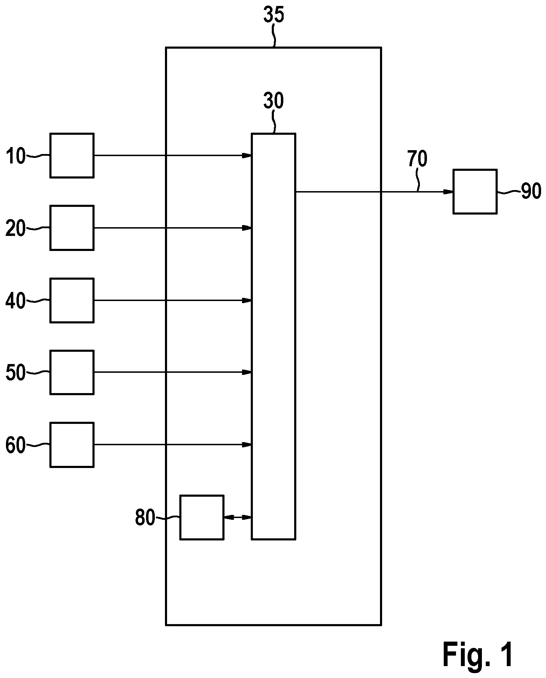

Figur 1 zeigt eine Vorrichtung zum Einstellen eines Motordrehmoments eines elektrischen Zweirads. Die Vorrichtung weist eine Steuereinheit 35 auf. Die Steuereinheit 35 umfasst dabei einen Mikrocontroller 30 und eine Speichereinheit 80. Mit Hilfe eines Geschwindigkeitsmessers 10 erfasst die Steuereinheit 35 die aktuelle Geschwindigkeit des elektrischen Zweirads. Weiterhin bestimmt die Steuereinheit 35 die Pedalbetätigung des Fahrers, die mit Hilfe eines Sensors erfasst wird. Dies geschieht beispielsweise mit Hilfe eines Trittfrequenzsensors 40, der die Trittfrequenz des Fahrers erfasst. Alternativ kann die Pedalbetätigung mit Hilfe eines Drehmomentsensors 50 an der Tretkurbel bestimmt werden. Des Weiteren erfasst die Steuereinheit 35 optional eine weitere Messgröße, die aktuelle Gesamtbeschleunigung des elektrischen Zweirads, beispielsweise mit Hilfe eines Beschleunigungssensors 20.

Das Gewicht des elektrischen Zweirads kann werksseitig mittels Bordcomputer 60 eingegeben werden und in der Speichereinheit 80 abgelegt werden. Das Gewicht des Fahrers kann ebenfalls mittels Bordcomputer 60 eingegeben werden oder mit einem entsprechenden Algorithmus automatisch ermittelt werden und im Speicher 80 hinterlegt werden.

Des Weiteren werden werksseitig beispielsweise mittels Bordcomputer 60 oder direkt Fahrerunterstützungsprofile im Speicher 80 hinterlegt. Der Fahrer kann ebenfalls mittels Bordcomputer 60 eigene Fahrerunterstützungsprofile erzeugen, die im Speicher 80 abgelegt werden.

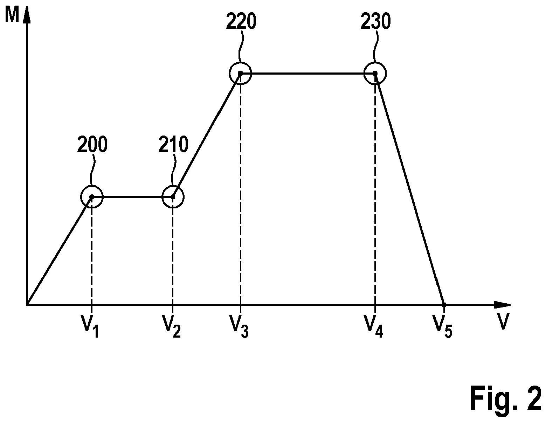

Ein Fahrerunterstützungsprofil ist beispielhaft in Figur 2 gezeigt. Wie bereits oben erwähnt stellt das Fahrerunterstützungsprofil den Zusammenhang zwischen Motordrehmoment und Pedalbetätigung des Fahrers bzw. der Wunschgeschwindigkeit des Fahrers bzw. der Sollgeschwindigkeit dar.

Die Steuereinheit 35 bestimmt den unteren und den oberen Grenzwert des vorgegebenen Bereichs. Die beiden Grenzwerte befinden sich in einem Abstand von +/- 5 km/h, +/- 4 km/h, +/- 3 km/h, +/- 2 km/h, +/- 1 km/h um den Geschwindigkeitswert, an dessen Stelle sich die unstetige Änderung im Abhängigkeitsverhältnis im Fahrerunterstützungsprofil befindet. Alternativ werden die Grenzwerte in einem Bereich von +/- 2,5 %, +/- 5%, +/- 7,5% , +/-10%, +/-15% oder +/- 20% um den Geschwindigkeitswert bestimmt.

Der Mikrocontroller 30 erzeugt in Abhängigkeit der Pedalbetätigung durch den Fahrer, der zukünftigen Geschwindigkeit, des vorgegebenen Bereichs und des Fahreruntersützungsprofils ein Signal 70 zur Ansteuerung des Motors 90.

Figur 2 zeigt ein mögliches Fahrerunterstützungsprofil. Es zeigt den Zusammenhang zwischen dem unterstützenden Motordrehmoment und der Pedalbetätigung des Fahrers, d. h. der Betätigung der Tretkurbel durch den Fahrer. Diese Pedalbetätigung des Fahrers wird im Fahrerunterstützungsprofil in Form der Beschleunigung durch den Fahrer oder der Geschwindigkeit mit der der Fahrer in die Pedale tritt oder seiner Wunschgeschwindigkeit oder Sollgeschwindigkeit, d. h. die Geschwindigkeit die er mit Hilfe der Motorunterstützung erreichen möchte, auf der x-Achse des Fahrerunterstützungsprofils wiedergegeben. Das Abhängigkeitsverhältnis im Fahrerunterstützungsprofil ist in Figur 2 als Kurve dargestellt, die die Abhängigkeit des Motordrehmoments von der Betätigung der Tretkurbel durch den Fahrer wiedergibt, d. h. das Verhältnis der Wunsch- oder Sollgeschwindigkeit zum erforderlichen Motordrehmoment und wird im Weiteren Sollkurve genannt.

In dem beispielhaft, gezeigten Fahrerunterstützungsprofil weist die Sollkurve vorgegebene Bereiche 200, 210, 220, 230 auf, die mindestens einen Geschwindigkeitswert aufweisen, bei dessen Passieren sich die Steigung der Sollkurve nicht stetig ändert, d. h. an diesen Stellen weist die Sollkurve jeweils eine Knickstelle auf. Durch diese Knickstellen ändert sich die Unterstützung für den Fahrer auf wahrnehmbare Weise beim Überschreiten der Knickstellen durch Erhöhen oder Abbremsen der Geschwindigkeit, beispielsweise durch eine ruckartige Fahrweise des elektrischen Zweirads.

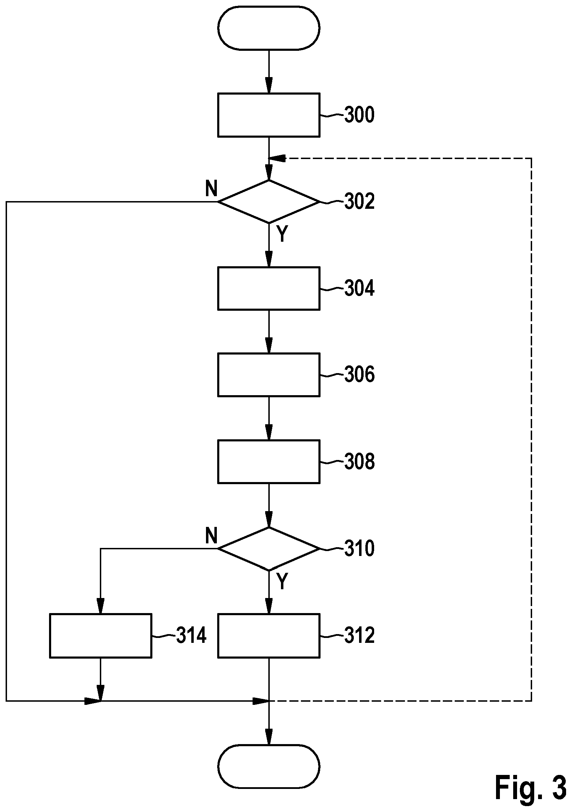

Figur 3 zeigt ein Verfahren zum Einstellen des Motordrehmoments des elektrischen Zweirads. Das Verfahren startet mit Schritt 300 mit dem Einlesen eines Fahrerunterstützungsprofils beispielsweise aus dem Speicher 80. In einem folgenden Schritt 302 wird mindestens ein vorgegebener Bereich im Fahrerunterstützungsprofil bestimmt. Dieser vorgegebene Bereich ist so definiert, dass er eine Stelle im Fahrerunterstützungsprofil aufweist, an der die Änderung der Steigung der Sollkurve unstetig ist. Weist das Fahrerunterstützungsprofil keine Knickstelle auf, so wird das Verfahren beendet. Wahlweise kann das Verfahren nach einer Änderung des Fahrerunterstützungsprofils durch den Fahrer mit Hilfe des Bordcomputers neu gestartet werden. In einem weiteren Schritt 304 wird die aktuelle Geschwindigkeit des elektrischen Zweirads beispielsweise mit Hilfe eines Geschwindigkeitsmessers erfasst. In einem folgenden Schritt 306 wird die Betätigung der Tretkurbel durch den Fahrer erfasst, beispielsweise mit Hilfe eines Trittfrequenzsensors oder eines Drehmomentsensors an der Tretkurbel. In einem folgenden Schritt 308 wird eine zukünftige Geschwindigkeit des elektrischen Zweirads bestimmt. Diese ergibt sich in Abhängigkeit der aktuellen Geschwindigkeit und der Pedalbetätigung des Fahrers. In einem folgenden Schritt 310 wird überprüft, ob sich die zukünftige Geschwindigkeit innerhalb eines der vorgegebenen Bereiche befindet. Ist dies der Fall, so wird in einem weiteren Schritt 312 das unterstützende Motordrehmoment abweichend von der Sollkurve des Fahrerunterstützungsprofils in Abhängigkeit der der Pedalbetätigung durch den Fahrer eingestellt. Dabei kann das Motordrehmoment gegenüber der Sollkurve abgesenkt oder erhöht werden. Die Veränderung der Motoransteuerung wird somit vom Fahrer sanfter wahrgenommen und erhöht seinen Fahrkomfort im gesamten Geschwindigkeitsbereich. Befindet sich die zukünftige Geschwindigkeit nicht im vorgegebenen Bereich um die Knickstelle des Fahrerunterstützungsprofils, so wird in Schritt 314 das unterstützende Motordrehmoment anhand der Sollkurve des Fahrerunterstützungsprofils eingestellt und/oder mit Schritt 302 weiter ausgeführt.

In einem Ausführungsbeispiel erstreckt sich der vorgegebene Bereich in einem Bereich von ungefähr +/- 5 km/h, +/- 4 km/h, +/- 3 km/h, +/- 2 km/h, +/- 1 km/h um die Geschwindigkeitsstelle an der das Fahrerunterstützungsprofil einen Knick aufweist.

In einem anderen Ausführungsbeispiel erstreckt sich der vorgegebene Bereich in einem Bereich von bis zu +/- 20% , insbesondere +/- 2,5%, +/- 5%, +/- 10% oder +/- 15% der Geschwindigkeit um die Geschwindigkeitsstelle an der das Fahrerunterstützungsprofil einen Knick aufweist.

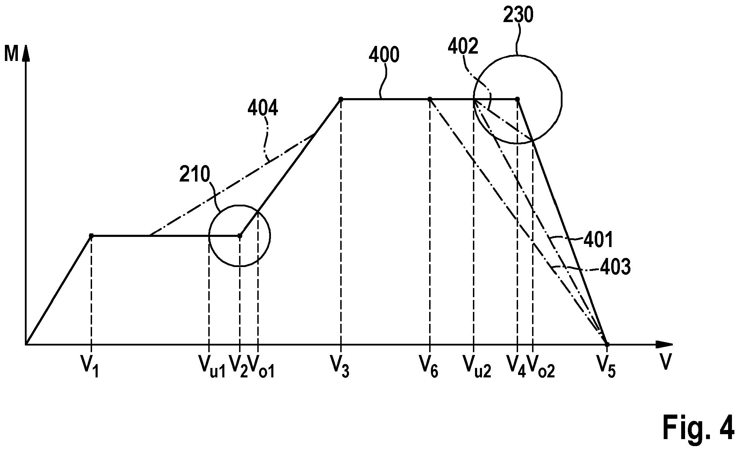

Figur 4 zeigt das Fahrerunterstützungsprofil aus Figur 2, das mit Hilfe des Verfahrens zum Einstellen des Motordrehmoments des elektrischen Zweirads im vorgegebenen Bereich 230 verändert wird. Zusätzlich weist Figur 4 die untere Grenze vu2 und die obere Grenze vo2 des vorgegebenen Bereichs 230 auf. Des Weiteren ist für das Beispiel die aktuelle Geschwindigkeit v6 gekennzeichnet.

In einem Ausführungsbeispiel befindet sich die aktuelle Geschwindigkeit des elektrischen Zweirads v6 im Bereich zwischen den Geschwindigkeitsstellen v3 und v4. Aus der Sollkurve 400 des Fahrerunterstützungsprofils geht hervor, dass das unterstützende Motordrehmoment in diesem Geschwindigkeitsbereich konstant ist. Der vorgegebene Bereich 230 befindet sich beispielsweise +/- 2km/h um die Knickstelle v4. Erhöht der Fahrer seine Trittfrequenz oder sein Fahrerdrehmoment, sodass die zukünftige Geschwindigkeit im vorgegebenen Bereich 230 liegt, so wird das unterstützende Motordrehmoment abweichend von der Sollkurve 400 des Fahrerunterstützungsprofils in Abhängigkeit der Pedalbetätigung durch den Fahrer verändert, beispielsweise entsprechend der Rampe 402.

In einem anderen Ausführungsbeispiel wird dazu das Motordrehmoment zwischen der aktuellen Geschwindigkeit v6 und der Maximalgeschwindigkeit v5 abgesenkt, beispielsweise entsprechend der Rampe 403.

In einem weiteren Ausführungsbeispiel wird das Motordrehmoment ab dem Überschreiten der unteren Grenze vu2 des vorgegebenen Bereichs 230 durch die aktuelle Geschwindigkeit v6 verändert. Entweder wird das Motordrehmoment bis zur oberen Grenze vo2 des vorgegebenen Bereichs 230 abgesenkt oder bis zur gesetzlich unterstützten Maximalgeschwindigkeit v5, beispielsweise entsprechend der Rampe 401.

In einem anderen Ausführungsbeispiel wird das Motordrehmoment ab dem Unterschreiten der oberen Grenze vo2 des vorgegebenen Bereichs 230 durch die aktuelle Geschwindigkeit verändert. Die aktuelle Geschwindigkeit befindet sich somit im vorgegebenen Bereich 230. Das Motordrehmoment wird bis zur unteren Grenze vu2 des vorgegebenen Bereichs beispielsweise linear erhöht.

Die angepassten Profilkurve können in Form von Geraden oder auch als Kurve, beispielsweise als e-Funktion ausgestaltet sein, sodass keine oder weniger Knickstellen im Fahrerunterstützungsprofil vorhanden sind.

Der Fahrkomfort wird somit durch die Anpassung des Fahrerunterstützungsprofils bis hin zu hohen Geschwindigkeiten im Bereich von 15 km/h bis ungefähr 25 km/h aufrecht erhalten ohne die Maximalgeschwindigkeit zu überschreiten.

In einem weiteren Ausführungsbeispiel erhöht der Fahrer ausgehendend von der aktuellen Geschwindigkeit des elektrischen Zweirads v6 seine Trittfrequenz, sodass die zukünftige Geschwindigkeit des elektrischen Zweirads sich im vorgegebenen Bereich 230 befindet. Das Motordrehmoment wird beispielsweise ab der aktuellen Geschwindigkeit v6 abgesenkt entweder als Gerade mit der oberen Grenze vo2 des vorgegebenen Bereichs 230 oder mit der Maximalgeschwindigkeit v5 als Endpunkt.

In einem anderen Ausführungsbeispiel reduziert der Fahrer seine Trittfrequenz oder die Gesamtbeschleunigung ausgehend von der aktuellen Geschwindigkeit v6, sodass sich die zukünftige Geschwindigkeit außerhalb des vorgegebenen Bereichs 230 befindet, so wird das Motordrehmoment anhand der Sollkurve 400 eingestellt.

In einem weiteren Ausführungsbeispiel befindet sich die aktuelle Geschwindigkeit im Bereich zwischen v1 und v2. Betätigt der Fahrer die Tretkurbel und beschleunigt somit das elektrische Zweirads, sodass die zukünftige Geschwindigkeit im Bereich 210 liegt, so wird das Motordrehmoment abweichend von der Sollkurve 400 erhöht. Dies geschieht entweder ab der aktuellen Geschwindigkeit oder ab dem Überschreiten der unteren Grenze vu1 des vorgegebenen Bereichs 210, sodass sich die zukünftige Geschwindigkeit innerhalb des vorgegebenen Bereichs 210 befindet. Der Endpunkt der Anpassung kann im Bereich zwischen den beiden Knickstellen v2 und v3 gewählt werden, z. B. die obere Grenze vo1 des vorgegebenen Bereichs 210. Die Anpassung erfolgt beispielsweise in Form einer Geraden 404. Die Anpassung kann auch in Form einer e-Funktion oder einer Kurve, die an die Sollkurve 400 angenähert ist, ohne jedoch eine Knickstelle aufzuweisen, erfolgen. Überschreitet die zukünftige Geschwindigkeit die obere Grenze vo1 des vorgegebenen Bereichs 210, so wird das Motordrehmoment in Abhängigkeit der Sollkurve 400 eingestellt. Reduziert der Fahrer sein Fahrerdrehmoment danach wieder, sodass die zukünftige Geschwindigkeit die obere Grenze vo1 des vorgegebenen Bereichs 210 unterschreitet, so befindet sich die zukünftige Geschwindigkeit erneut im vorgegebenen Bereich 210 und das Motordrehmoment wird in Abhängigkeit der Pedalbetätigung des Fahrers beispielsweise in Form einer Geraden von der oberen Grenze vo1 bis zur unteren Grenze vu1 des vorgegebenen Bereichs 210 abgesenkt.

## Patentansprüche

1. Verfahren zum Einstellen eines Motordrehmoments eines elektrischen Zweirads mit den Schritten:
- Einlesen (400) eines Fahrerunterstützungsprofils, das eine Abhängigkeit des Motordrehmoments von einer Pedalbetätigung des Fahrers darstellt,
- Bestimmen (410) von mindestens einem vorgegebenen Bereich (200 - 230) im Fahrerunterstützungsprofil, wobei der Bereich mindestens eine nicht stetige Änderung der Steigung der Kurve des Fahrerunterstützungsprofils aufweist, und
- Ermitteln (420) einer zukünftigen Geschwindigkeit des elektrischen Zweirads in Abhängigkeit einer aktuellen Geschwindigkeit des elektrischen Zweirads und einer Pedalbetätigung des Fahrers,
**dadurch gekennzeichnet, dass**
- Überprüfung, ob sich die zukünftige Geschwindigkeit des elektrischen Zweirads innerhalb des vorgegebenen Bereichs befindet, und
- Änderung des Motordrehmoments in Abhängigkeit der Pedalbetätigung des Fahrers abweichend vom Fahrerunterstützungsprofil, wenn sich die zukünftige Geschwindigkeit des elektrischen Zweirads innerhalb des vorgegebenen Bereichs befindet, wobei abrupte Übergänge bei der Motordrehmomentunterstützung während eines Beschleunigungs- oder Abbremsvorgangs unterbleiben.

2. Verfahren nach Anspruch 1, **dadurch gekennzeichnet, dass** für den vorgegebenen Bereich ein unterer und ein oberer Grenzwert bestimmt werden, wobei die Grenzwerte +/- 5 km/h, +/- 4 km/h, +/- 3km/h, +/- 2 km/h, +/- 1 km/h um einen Geschwindigkeitswert bestimmt werden, an dessen Stelle sich die unstetige Änderung des Abhängigkeitsverhältnisses im Fahrerunterstützungsprofil befindet.

3. Verfahren nach Anspruch 2, **dadurch gekennzeichnet, dass** das Motordrehmoment linear zwischen dem unteren und dem oberen Grenzwert des vorgegebenen Bereichs (200 - 230) abweichend vom Fahrerunterstützungsprofil verändert wird, wenn die zukünftige Geschwindigkeit des elektrischen Zweirads im vorgegebenen Bereich liegt.

4. Verfahren nach einem der Ansprüche 1 oder 2, **dadurch gekennzeichnet, dass** das Motordrehmoment ab der aktuellen Geschwindigkeit des elektrischen Zweirads in Abhängigkeit der Pedalbetätigung des Fahrers abweichend vom Fahrerunterstützungsprofil verändert wird, wenn die zukünftige Geschwindigkeit des elektrischen Zweirads im vorgegebenen Bereich liegt.

5. Verfahren nach einem der Ansprüche 1 bis 3, **dadurch gekennzeichnet, dass** das Motordrehmoment ab einem Überschreiten des unteren Grenzwerts des vorgegebenen Bereichs durch die aktuelle Geschwindigkeit in Abhängigkeit der Pedalbetätigung des Fahrers abweichend vom Fahrerunterstützungsprofil verändert wird, wenn die zukünftige Geschwindigkeit des elektrischen Zweirads im vorgegebenen Bereich liegt.

6. Verfahren nach einem der Ansprüche 1 bis 3, **dadurch gekennzeichnet, dass** das Motordrehmoment ab einem Unterschreiten des oberen Grenzwerts des vorgegebenen Bereichs durch die aktuelle Geschwindigkeit in Abhängigkeit der Pedalbetätigung des Fahrers abweichend vom Fahrerunterstützungsprofil verändert wird, wenn die zukünftige Geschwindigkeit des elektrischen Zweirads im vorgegebenen Bereich liegt.

7. System zum Einstellen eines Motordrehmoments eines elektrischen Zweirads mit
- einer Steuereinheit (35), die ein Fahrerunterstützungsprofil einliest, das eine Abhängigkeit des Motordrehmoments von einer Pedalbetätigung des Fahrers darstellt,
- einem ersten Mittel (20), das eine Pedalbetätigung des Fahrers erfasst,
- einem zweiten Mittel (10), das eine aktuelle Geschwindigkeit des elektrischen Zweirads erfasst,
- wobei die Steuereinheit (35) mindestens einen vorgegebenen Bereich (200 - 230) im Fahrerunterstützungsprofil bestimmt, wobei der mindestens eine vorgegebene Bereich mindestens eine nicht stetige Änderung innerhalb des Fahrerunterstützungsprofils aufweist, und
- wobei die Steuereinheit (35) eine zukünftige Geschwindigkeit des elektrischen Zweirads in Abhängigkeit der aktuellen Geschwindigkeit des elektrischen Zweirads und der Pedalbetätigung des Fahrers ermittelt,
**dadurch gekennzeichnet, dass**
- die Steuereinheit (35) überprüft, ob sich die zukünftige Geschwindigkeit des elektrischen Zweirads innerhalb des vorgegebenen Bereichs befindet und
- die Steuereinheit (35) das Motordrehmoment in Abhängigkeit der Pedalbetätigung des Fahrers abweichend vom Fahrerunterstützungsprofil verändert, insbesondere absenkt oder erhöht, wenn sich die zukünftige Geschwindigkeit des elektrischen Zweirads innerhalb des vorgegebenen Bereichs befindet, wobei abrupte Übergänge bei der Motordrehmomentunterstützung während eines Beschleunigungs- oder Abbremsvorgangs unterbleiben.

8. System nach Anspruch 7, **dadurch gekennzeichnet, dass** die Steuereinheit (35) den unteren und den oberen Grenzwert des vorgegebenen Bereichs in Abhängigkeit eines Geschwindigkeitswerts bestimmt an dessen Stelle sich die unstetige Änderung des Abhängigkeitsverhältnisses im Fahrerunterstützungsprofil befindet.

9. System nach Anspruch 8, **dadurch gekennzeichnet, dass** die Steuereinheit (35) das Motordrehmoment linear zwischen dem unteren und dem oberen Grenzwert des vorgegebenen Bereichs (200 - 230) abweichend vom Fahrerunterstützungsprofil verändert, wenn sich die zukünftige Geschwindigkeit des elektrischen Zweirads innerhalb des vorgegebenen Bereichs befindet.

10. System nach einem der Ansprüche 7 oder 8, **dadurch gekennzeichnet, dass** die Steuereinheit (35) das Motordrehmoment ab der aktuellen Geschwindigkeit des elektrischen Zweirads in Abhängigkeit der Pedalbetätigung des Fahrers abweichend vom Fahrerunterstützungsprofil verändert, wenn die zukünftige Geschwindigkeit des elektrischen Zweirads im vorgegebenen Bereich liegt.

11. System nach einem der Ansprüche 7 bis 9, **dadurch gekennzeichnet, dass** die Steuereinheit (35) das Motordrehmoment ab einem Überschreiten des unteren Grenzwerts des vorgegebenen Bereichs durch die aktuelle Geschwindigkeit in Abhängigkeit der Pedalbetätigung des Fahrers abweichend vom Fahrerunterstützungsprofil verändert, wenn die zukünftige Geschwindigkeit des elektrischen Zweirads im vorgegebenen Bereich liegt.

12. System nach einem der Ansprüche 7 bis 9, **dadurch gekennzeichnet, dass** die Steuereinheit (35) das Motordrehmoment ab einem Unterschreiten des oberen Grenzwerts des vorgegebenen Bereichs durch die aktuelle Geschwindigkeit in Abhängigkeit der Pedalbetätigung des Fahrers abweichend vom Fahrerunterstützungsprofil verändert, wenn die zukünftige Geschwindigkeit des elektrischen Zweirads im vorgegebenen Bereich liegt.

13. System nach einem der Ansprüche 7 bis 12, **dadurch gekennzeichnet, dass** die Steuereinheit (35) einen Mikrocontroller (30) aufweist.

## Claims

1. Method for adjusting a motor torque of a two-wheeled electric vehicle, comprising the steps of:
- reading in (400) a rider assistance profile which represents a dependency of the motor torque on a pedal operation by the rider,
- determining (410) at least one prespecified region (200 - 230) in the rider assistance profile, wherein the region has at least one discontinuous change in the gradient of the curve of the rider assistance profile, and
- ascertaining (420) a future speed of the two-wheeled electric vehicle depending on a current speed of the two-wheeled electric vehicle and a pedal operation by the rider,
**characterized by**
- checking whether the future speed of the two-wheeled electric vehicle is located within the prespecified region, and
- changing the motor torque, depending on the pedal operation by the rider, in a deviation from the rider assistance profile when the future speed of the two-wheeled electric vehicle is located within the prespecified region, wherein abrupt transitions in the motor torque assistance are suppressed during an acceleration or braking process.

2. Method according to Claim 1, **characterized in that** a lower and an upper limit value are determined for the prespecified region, wherein the limit values are determined at +/- 5 km/h, +/- 4 km/h, +/- 3 km/h, +/- 2 km/h, +/- 1 km/h about a speed value at the point of which the discontinuous change in the dependency ratio is located in the rider assistance profile.

3. Method according to Claim 2, **characterized in that** the motor torque is changed in a linear manner between the lower and the upper limit value of the prespecified region (200 - 230) in a deviation from the rider assistance profile when the future speed of the two-wheeled electric vehicle lies in the prespecified region.

4. Method according to either of Claims 1 and 2, **characterized in that** the motor torque starting from the current speed of the two-wheeled electric vehicle is changed, depending on the pedal operation by the rider, in a deviation from the rider assistance profile when the future speed of the two-wheeled electric vehicle lies in the prespecified region.

5. Method according to one of Claims 1 to 3, **characterized in that** the motor torque starting from overshooting of the lower limit value of the prespecified region by the current speed is changed, depending on the pedal operation by the rider, in a deviation from the rider assistance profile when the future speed of the two-wheeled electric vehicle lies in the prespecified region.

6. Method according to one of Claims 1 to 3, **characterized in that** the motor torque starting from undershooting of the upper limit value of the prespecified region by the current speed is changed, depending on the pedal operation by the rider, in a deviation from the rider assistance profile when the future speed of the two-wheeled electric vehicle lies in the prespecified region.

7. System for adjusting a motor torque of a two-wheeled electric vehicle, comprising
- a control unit (35) which reads in a rider assistance profile which represents a dependency of the motor torque on a pedal operation by the rider,
- a first means (20) which detects a pedal operation by the rider,
- a second means (10) which detects a current speed of the two-wheeled electric vehicle,
- wherein the control unit (35) determines at least one prespecified region (200 - 230) in the rider assistance profile, wherein the at least one prespecified region has at least one discontinuous change within the rider assistance profile, and
- wherein the control unit (35) ascertains a future speed of the two-wheeled electric vehicle depending on the current speed of the two-wheeled electric vehicle and the pedal operation by the rider,
**characterized in that**
- the control unit (35) checks whether the future speed of the two-wheeled electric vehicle is located within the prespecified region and
- the control unit (35) changes, in particular lowers or raises, the motor torque, depending on the pedal operation by the rider, in a deviation from the rider assistance profile when the future speed of the two-wheeled electric vehicle is located within the prespecified region, wherein abrupt transitions in the motor torque assistance are suppressed during an acceleration or braking process.

8. System according to Claim 7, **characterized in that** the control unit (35) determines the lower and the upper limit value of the prespecified region depending on a speed value at the point of which the discontinuous change in the dependency ratio is located in the rider assistance profile.

9. System according to Claim 8, **characterized in that** the control unit (35) changes the motor torque in a linear manner between the lower and the upper limit value of the prespecified region (200 - 230) in a deviation from the rider assistance profile when the future speed of the two-wheeled electric vehicle is located within the prespecified region.

10. System according to either of Claims 7 and 8, **characterized in that** the control unit (35) changes the motor torque starting from the current speed of the two-wheeled electric vehicle, depending on the pedal operation by the rider, in a deviation from the rider assistance profile when the future speed of the two-wheeled electric vehicle lies in the prespecified region.

11. System according to one of Claims 7 to 9, **characterized in that** the control unit (35) changes the motor torque starting from overshooting of the lower limit value of the prespecified region by the current speed, depending on the pedal operation by the rider, in a deviation from the rider assistance profile when the future speed of the two-wheeled electric vehicle lies in the prespecified region.

12. System according to one of Claims 7 to 9, **characterized in that** the control unit (35) changes the motor torque starting from undershooting of the upper limit value of the prespecified region by the current speed, depending on the pedal operation by the rider, in a deviation from the rider assistance profile when the future speed of the two-wheeled electric vehicle lies in the prespecified region.

13. System according to one of Claims 7 to 12, **characterized in that** the control unit (35) has a microcontroller (30).

## Revendications

1. Procédé permettant de régler un couple moteur d'un deux-roues électrique, comprenant les étapes consistant à :
- lire (400) un profil d'assistance au cycliste qui représente une dépendance du couple moteur et d'un actionnement des pédales par le cycliste,
- déterminer (410) au moins une plage prédéfinie (200 à 230) dans le profil d'assistance au cycliste, la plage présentant au moins une modification discontinue de la pente de la courbe du profil d'assistance au cycliste, et
- déterminer (420) une vitesse future du deux-roues électrique en fonction d'une vitesse actuelle du deux-roues électrique et d'un actionnement des pédales par le cycliste,
**caractérisé par** les étapes consistant à
- vérifier si la vitesse future du deux-roues électrique se trouve à l'intérieur de la plage prédéfinie, et
- modifier le couple moteur en fonction de l'actionnement des pédales par le cycliste différemment du profil d'assistance au cycliste lorsque la vitesse future du deux-roues électrique se trouve à l'intérieur de la plage prédéfinie, dans lequel il n'y a pas de transitions brusques dans l'assistance de couple moteur pendant une opération d'accélération ou de décélération.

2. Procédé selon la revendication 1, **caractérisé en ce que** pour la plage prédéfinie, une valeur limite inférieure et une valeur limite supérieure sont déterminées, les valeurs limites étant déterminées à +/- 5 km/h, +/- 4 km/h, +/- 3 km/h, +/- 2 km/h, +/-1 km/h d'une valeur de vitesse à l'endroit de laquelle se trouve la modification discontinue du rapport de dépendance dans le profil d'assistance au cycliste.

3. Procédé selon la revendication 2, **caractérisé en ce que** le couple moteur est modifié de manière linéaire entre la valeur limite inférieure et la valeur limite supérieure de la plage prédéfinie (200 à 230) différemment du profil d'assistance au cycliste si la vitesse future du deux-roues électrique se trouve dans la plage prédéfinie.

4. Procédé selon l'une quelconque des revendications 1 ou 2, **caractérisé en ce que** le couple moteur est modifié à partir de la vitesse actuelle du deux-roues électrique en fonction de l'actionnement des pédales par le cycliste différemment du profil d'assistance au cycliste si la vitesse future du deux-roues électrique se trouve dans la plage prédéfinie.

5. Procédé selon l'une quelconque des revendications 1 à 3, **caractérisé en ce que** le couple moteur est modifié à partir d'un dépassement de la valeur limite inférieure de la plage prédéfinie par la vitesse actuelle en fonction de l'actionnement des pédales par le cycliste différemment du profil d'assistance au cycliste si la vitesse future du deux-roues électrique se trouve dans la plage prédéfinie.

6. Procédé selon l'une quelconque des revendications 1 à 3, **caractérisé en ce que** le couple moteur est modifié à partir d'un soupassement de la valeur limite supérieure de la plage prédéfinie par la vitesse actuelle en fonction de l'actionnement des pédales par le cycliste différemment du profil d'assistance au cycliste si la vitesse future du deux-roues électrique se trouve dans la plage prédéfinie.

7. Système permettant de régler un couple moteur d'un deux-roues électrique, comprenant
- une unité de commande (35) qui lit un profil d'assistance au cycliste représentant une dépendance du couple moteur et d'un actionnement des pédales par le cycliste,
- un premier moyen (20) qui détecte un actionnement des pédales par le cycliste,
- un deuxième moyen (10) qui détecte une vitesse actuelle du deux-roues électrique,
- l'unité de commande (35) déterminant au moins une plage prédéfinie (200 à 230) dans le profil d'assistance au cycliste, ladite au moins une plage prédéfinie présentant au moins une modification discontinue à l'intérieur du profil d'assistance au conducteur, et
- l'unité de commande (35) déterminant une vitesse future du deux-roues électrique en fonction de la vitesse actuelle du deux-roues électrique et de l'actionnement des pédales par le cycliste,
**caractérisé en ce que**
- l'unité de commande (35) vérifie si la vitesse future du deux-roues électrique se trouve à l'intérieur de la plage prédéfinie, et
- l'unité de commande (35) modifie, en particulier diminue ou augmente, le couple moteur en fonction de l'actionnement des pédales par le cycliste différemment du profil d'assistance au cycliste si la vitesse future du deux-roues électrique se trouve à l'intérieur de la plage prédéfinie, dans lequel il n'y a pas de transitions brusques dans l'assistance de couple moteur pendant une opération d'accélération ou de décélération.

8. Système selon la revendication 7, **caractérisé en ce que** l'unité de commande (35) détermine la valeur limite inférieure et la valeur limite supérieure de la plage prédéfinie en fonction d'une valeur de vitesse à l'endroit de laquelle se trouve la modification discontinue du rapport de dépendance dans le profil d'assistance au cycliste.

9. Système selon la revendication 8, **caractérisé en ce que** l'unité de commande (35) modifie le couple moteur de manière linéaire entre la valeur limite inférieure et la valeur limite supérieure de la plage prédéfinie (200 à 230) différemment du profil d'assistance au cycliste si la vitesse future du deux-roues électrique se trouve à l'intérieur de la plage prédéfinie.

10. Système selon l'une quelconque des revendications 7 ou 8, **caractérisé en ce que** l'unité de commande (35) modifie le couple moteur à partir de la vitesse actuelle du deux-roues électrique en fonction de l'actionnement des pédales par le cycliste différemment du profil d'assistance au cycliste si la vitesse future du deux-roues électrique se trouve dans la plage prédéfinie.

11. Système selon l'une quelconque des revendications 7 à 9, **caractérisé en ce que** l'unité de commande (35) modifie le couple moteur à partir d'un dépassement de la valeur limite inférieure de la plage prédéfinie par la vitesse actuelle en fonction de l'actionnement des pédales par le cycliste différemment du profil d'assistance au cycliste si la vitesse future du deux-roues électrique se trouve dans la plage prédéfinie.

12. Système selon l'une quelconque des revendications 7 à 9, **caractérisé en ce que** l'unité de commande (35) modifie le couple moteur à partir d'un soupassement de la valeur limite supérieure de la plage prédéfinie par la vitesse actuelle en fonction de l'actionnement des pédales par le cycliste différemment du profil d'assistance au cycliste si la vitesse future du deux-roues électrique se trouve dans la plage prédéfinie.

13. Système selon l'une quelconque des revendications 7 à 12, **caractérisé en ce que** l'unité de commande (35) présente un microcontrôleur (30).
